# EUROPEAN PATENT APPLICATION

(11) **EP 1 195 108 A2**
(43) Date of publication of application: **10.04.2002**
(21) Application number: 01112626.5
(22) Date of filing: 23.05.2001
(51) Int. Cl.: A45D 44/02

(54) **Management system for barber and beauty shops**

(30) Priority: 06.10.2000 JP 2000307094
(71) Applicant: QB. Net Co., Ltd., Tokyo 104-0061 (JP)
(72) Inventor: Konishi, Kuniyoshi, Shizuoka-ken (JP)
(74) Representative: Liedl, Christine, Dipl.-Chem.

(57) **Abstract**

A management system for barber and beauty shops not requiring massive labor and time for managing shops, and capable of framing adequately and quickly a plan for enhancing sales and improving services in shops is provided. In the management system for barber and beauty shops, a plurality of barber and beauty shops, a business consignment organ, a management head office, and owners are connected through a communication network so as to make a package management of sales information, staff information, customer information and the like of shops. The sales information is transmitted from a payment machine of a haircut ticket vendor disposed in a reception of each shop, and the staff information and the customer information are input from an information input terminal device disposed in the vicinity of a hair cutting chair of each shop.

## Description

### BACKGROUND OF THE INVENTION

### Field of the Invention

The present invention relates to a management system for barber and beauty shops capable of performing a package management of sales information, staff information, customer information and the like in a plurality of barber and beauty shops.

### Related Art Statement

While in the past, with respect to the barber and beauty shops, a large majority thereof had taken the form of operation that a barber or a beautician oneself individually make a business, it has been recently increased that a plurality of shops employ a plurality of barbers and beauticians to develop a chain store system. In the development of chains as described above, most of cases are that the same shop name is applied to barber and beauty shops belonging to the chain store system, and they make a business using a similar shop design.

However, even the barber and beauty shops belonging to the chain store system have been operated substantially in the form that remains unchanged. That is, a customer is called in order arrived, sit on a chair for haircutting, and directly pay a barber or a beautician a charge after hairdressing. Further, a responsible person of each shop had reported a chain head office on the sales information, staff information, customer information and the like of each shop by telephone, letter and the like.

As described above, since even the barber and beauty shops belonging to the chain store system have been operated substantially in the form which remains unchanged, it had not been possible for the chain head office to collect positively and quickly sales information, staff information, customer information and the like of each shop, requiring massive labor and time to manage the shops. It was not easy to frame a plan for enhancing sales and improving services in the shops.

### SUMMARY OF THE INVENTION

The present invention has been accomplished in view of the problem as noted above with respect to related art. An object of the invention is to provide a management system for barber and beauty shops capable of collecting positively and quickly sales information, staff information, customer information and the like of a plurality of barber and beauty shops, not requiring massive labor and time to manage shops, and capable of framing adequately and quickly a plan for enhancing sales and improving services in shops.

For achieving the aforementioned object, according to the characteristics of the management system for barber and beauty shops of the present invention, a plurality of barber and beauty shops, an business consignment organ, a management head office, and owners are connected through a communication network so as to make a package management of sales information, staff information, customer information and the like of shops.

### BRIEF DESCRIPTION OF THE DRAWINGS

FIG. 1 is a schematic constitutional view of a management system for barber and beauty shops according to the present invention;
FIG. 2 is a constitutional view of apparatus in barber and beauty shops;
FIG. 3 is a perspective view showing an apparatus constitution in a working section;
FIG. 4 is a front view of an information input terminal apparatus;
FIG. 5 is a front view of a cardholder;
FIG. 6 is a perspective view showing an apparatus constitution in a reception section;
FIG. 7 is a front view of a payment machine of a ticket vendor;
FIG. 8 is a front view of a printer of a ticket vendor;
FIG. 9 is a front view of a ticket;
FIG. 10 is a front view of a cash depositing number indication sheet;
FIG. 11 is a front view of a controller;
FIG. 12 is a view showing the operating and processing procedure in a shop;
FIG. 13 is a view showing the procedure for a shop-opening process;
FIG. 14 is a view showing the procedure for a shop-closing process;
FIG. 15 is a view showing the procedure for a staff-arrival process;
FIG. 16 is a view showing the procedure for a staff-leaving process;
FIG. 17 is a view showing the procedure for a process in charge of haircut;
FIG. 18 is a view showing the procedure for dealing with customers;
FIG. 19 is a view showing the procedure for a process in haircut work; and
FIG. 20 is a view showing the procedure for a data transfer process.

### DETAILED DESCRIPTION OF THE INVENTION

The preferred embodiments of the management system for barber and beauty shops according to the present invention will be described hereinafter with reference to the drawings.

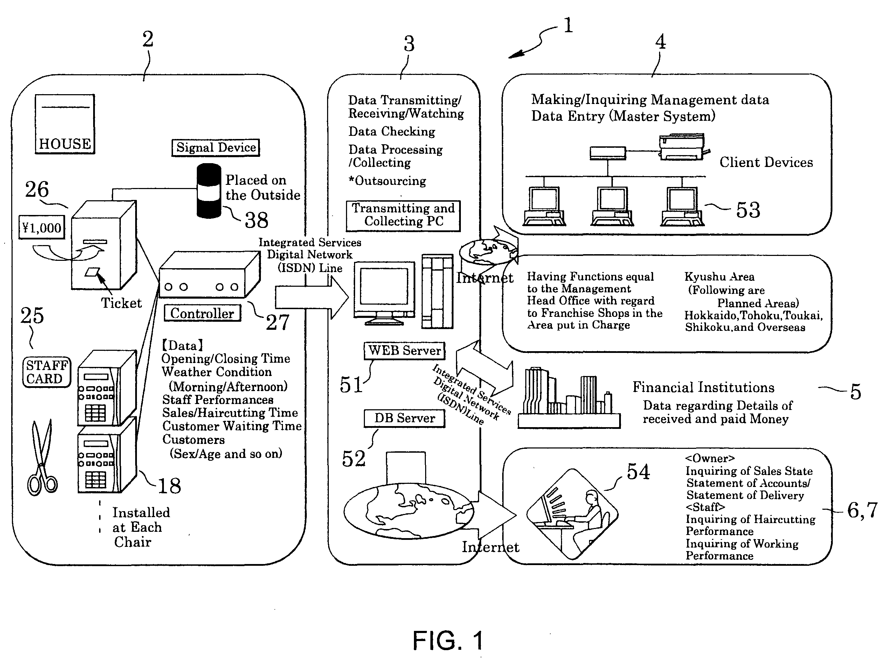

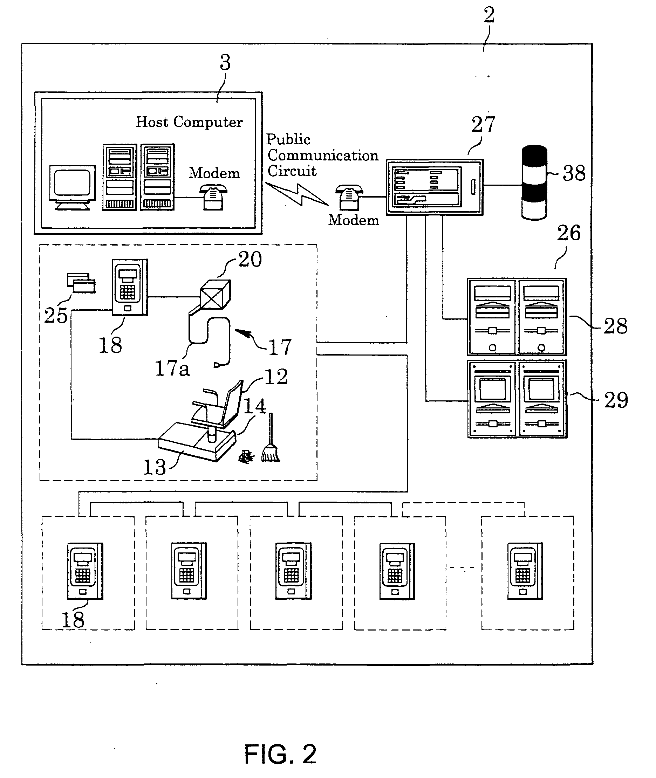

The management system for barber and beauty shops 1 of the present invention is designed so that a plurality of shops 2, an business consignment organ 3, a management head office 4, financial institutions 5, owners 6 and staffs 7 are connected through a communication network, as shown in FIGS. 1 and 2.

In each shop 2, a plurality of working sections 8 and one reception section 9 are defined, each working section 8 having a working cabinet 10 installed therein and the reception section 9 having a reception cabinet 11 installed therein.

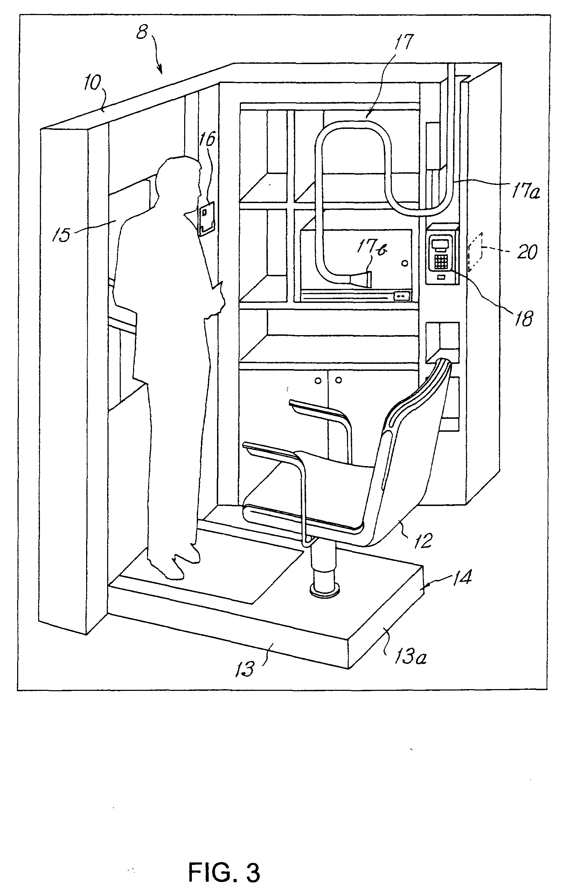

In the working section 8, a haircut chair 12 is surrounded by the working cabinet 10 and arranged, and a dust box 13 is disposed below the haircut chair 12, as shown in FIG. 3.

The dust box 13 has a rear plate part 13a that is free to be opened and closed, and the rear plate part 13a is opened so that cut hair, dust or the like are swept out and inserted into the dust box 13. A switch 14 for detecting the open and closed state of the rear plate part 13a is installed on the dust box 13.

In the working cabinet 10, a mirror 15 and a card holder 16 are disposed in the front part, and an air cleaning device 17 and an information input terminal device 18 are disposed in the side part, as shown in FIG. 3.

In the air cleaning device 17, an intake part 17b is connected to an extreme end of an air hose 17a, and a suction pump 19 is connected to the rear end. The air cleaning device 17 is operated to place the suction inlet 17b in contact with the hair of the head of a customer to thereby absorb the cut hair.

Further, a breaker 20 of the air cleaning device 17 is disposed internally in the side of the working cabinet 10.

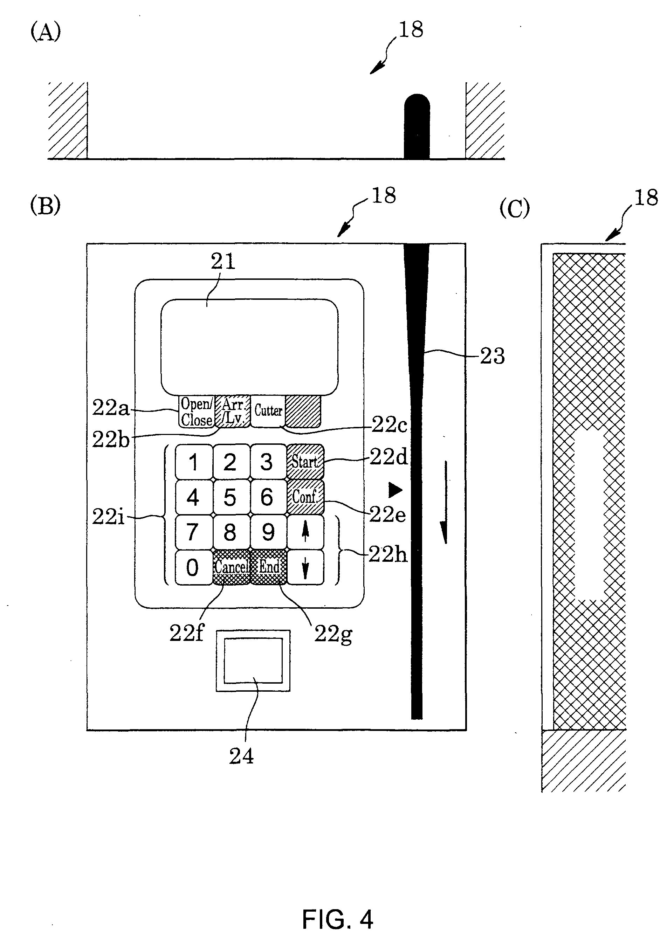

The information input terminal device 18 comprises a display 21, an operating key 22, card reader 23, and air cleaning switch 24, as shown in FIG. 4.

The operating key 22 comprises a shop opening/closing key 22a, arrival/leaving key 22b, haircutter key 22c, start-a-haircut key 22d, confirmation key 22e, a cancellation key 22f, an end-a-haircut key 22g, scroll key 22h, and numeric keys 22i.

The air cleaning switch 24 is provided to operate the air cleaning device 17.

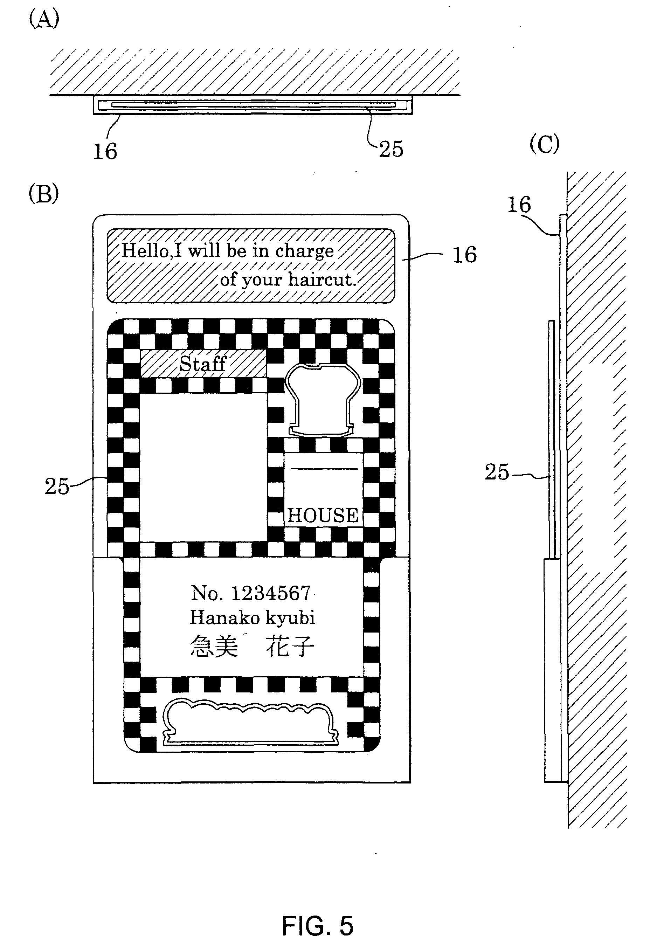

The cardholder 16 is provided to hold a staff ID card 25 inserted, as shown in FIG. 5.

On the staff ID card 25 are printed a face photo, code number, name and the like of the staff, and recorded individual information relating to the staff.

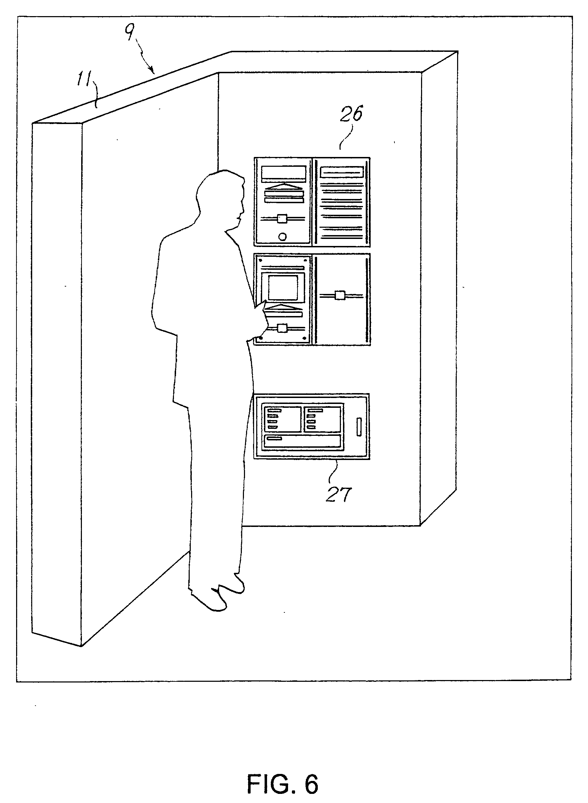

In the front part of the reception cabinet 11, a ticket vendor 26 and a controller 27 are disposed as shown in FIG. 6.

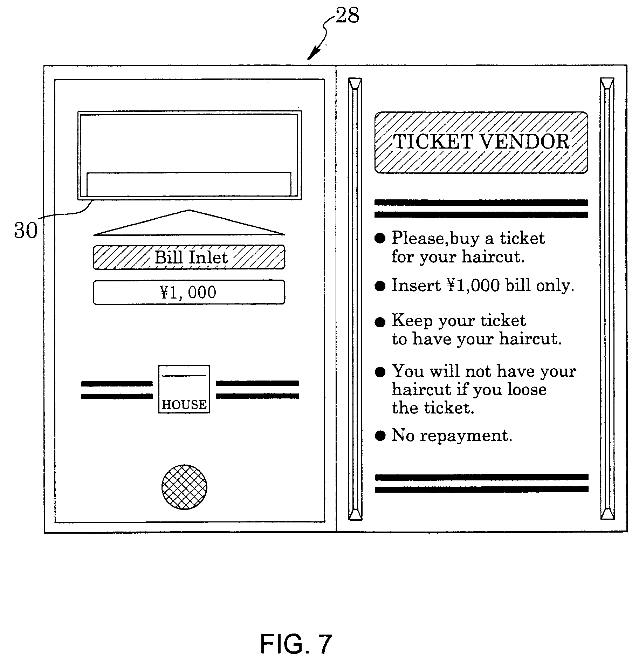

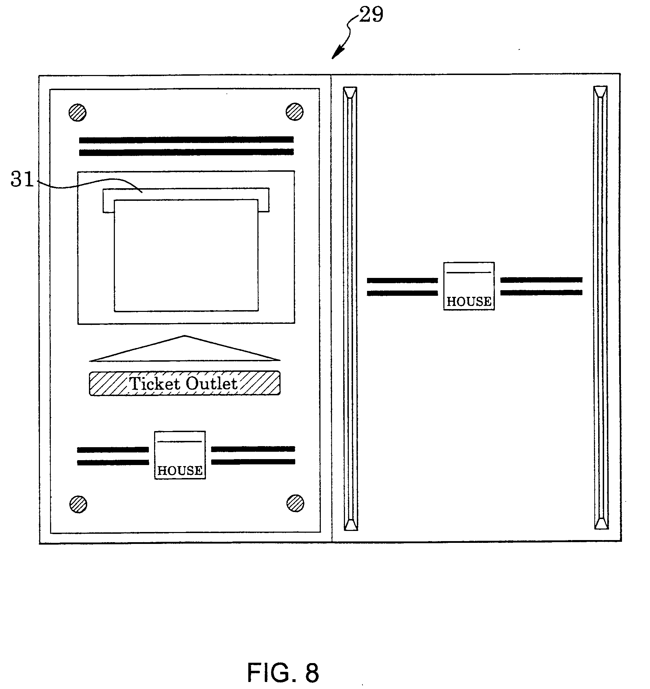

The ticket vendor 26 comprises a payment machine 28 and a printer 29, the payment machine being formed with a bill inlet 30 as shown in FIG. 7, the printer 29 being formed with a ticket outlet 31 as shown in FIG. 8.

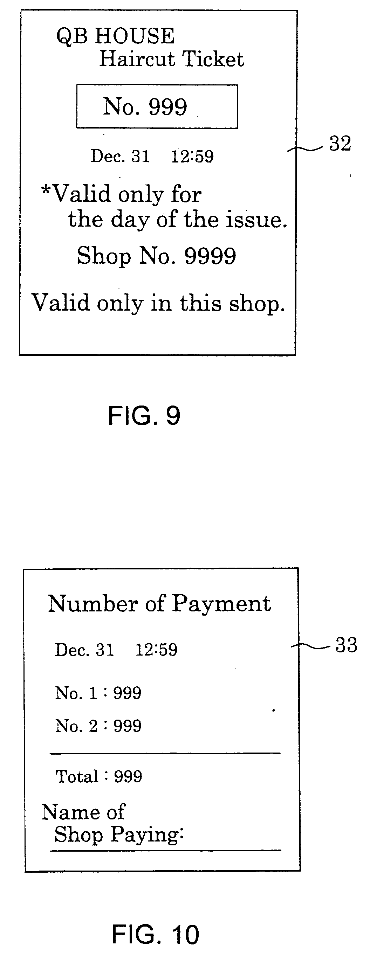

When a fixed currency (a one-thousand-yen bank note) is inserted into the currency bill inlet 30, a haircut ticket 32 as shown in FIG. 9 is printed and discharged from the ticket outlet 31. Further, a deposit number indication sheet 33 as shown in FIG. 10 can also be discharged.

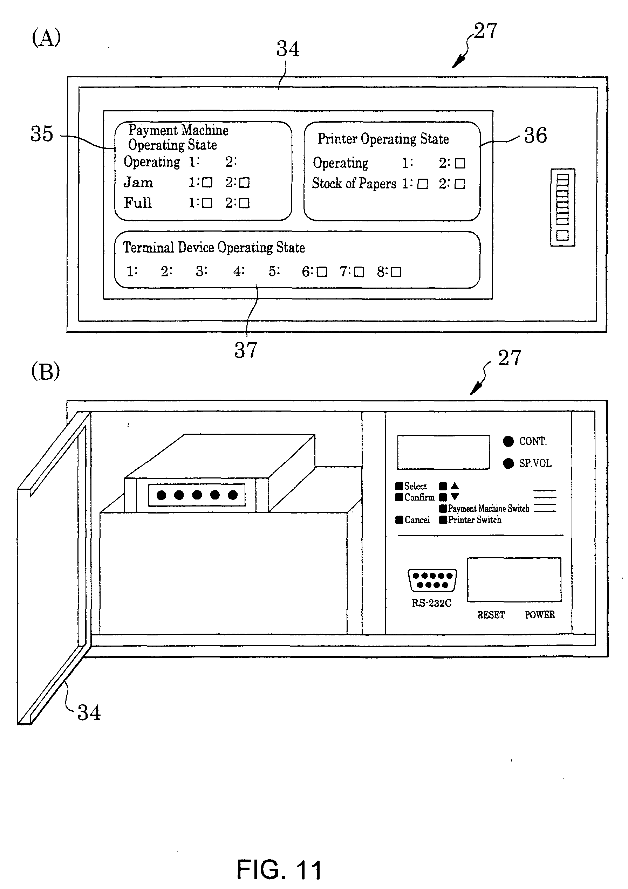

In the controller 27, a display panel 34 is formed, as shown in FIG. 11, with a payment operating state display part 35, a printer operating state display part 36, and an information input terminal device operating state display part 37, which can confirm whether operation is being performed or not.

Further, the controller 27 controls various apparatuses, and has also function of processing and storing various kinds of information.

Further, a signal device 38 which is lighted in a plurality of colors is disposed outside the entrance of each shop 2, as shown in FIG. 2, and the congestion state in the shop can be visually recognized by the signal device 38.

As shown in FIGS. 1 and 2, in the business consignment organ 3 are disposed a web server device 51 and a database server device 52, in which various information received from the shops 2 are processed and stored, and various information are transmitted and received among the management head office 4, financial institutions 5, the owners 6 and the staffs 7.

The shops 2 and the financial institutions 5 are connected with the business consignment organ 3 through the exclusive line, and the management head office 4, the owners 6 and the staffs 7 are connected with the business consignment organ 3 through the internet.

As shown in FIG. 1, various kinds of information are transmitted and received between a plurality of client devices 53 installed in the management head office 4 and the web server device 51 and the data base server device 52, and the owners 6 and the staffs 7 receive various information from the web server device 51 and the data base server device 52 by their own client device 54.

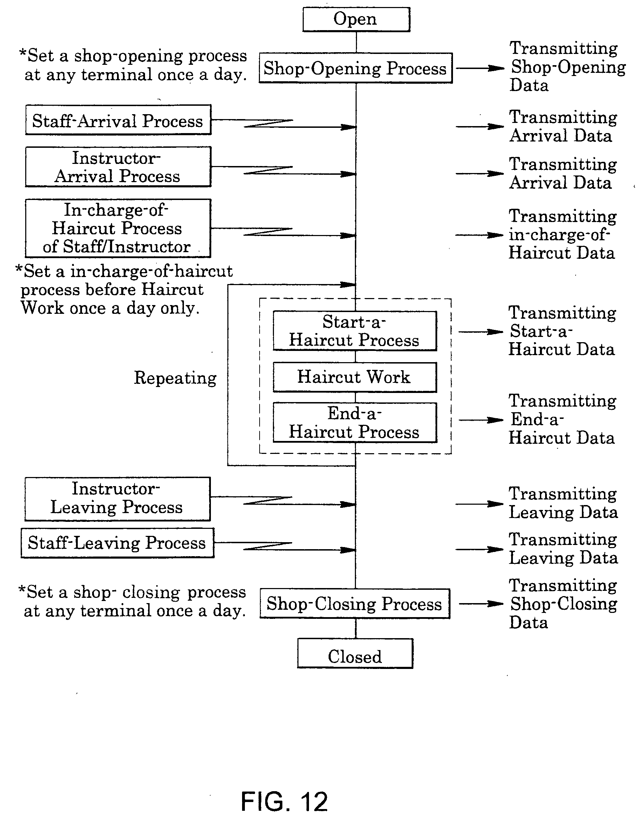

In the following, the operation and effect of the management system for barber and beauty shops according to the present invention are described showing the operating and processing procedures with reference to FIG. 12.

The staff first attended the shop 2 suitably executes the shop-opening process by the information input terminal device 18 of the working cabinet 10.

The shop opening/closing key 22a of the information input terminal device 18 is depressed to display characters "open" on the display 21. Then, one of the numeric keys 22i is depressed to input the weather conditions when the shop opens. Here, "0" indicates fine; "1" is cloudy; "2" is rain; and "3" is snow.

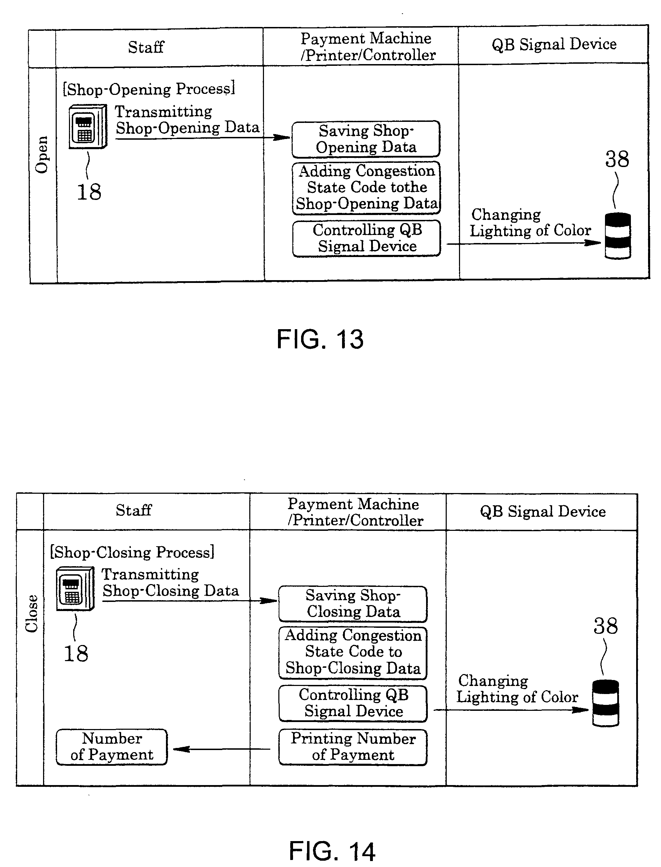

When the confirmation key 22e is depressed, the shop-opening data are transmitted to the controller 27, and the signal device 38 is lighted in green, as shown in FIG. 13.

The staff leaving the shop 2 at the last suitably executes the shop-closing process by the information input terminal device 18 of the working cabinet 10.

The shop opening/closing key 22a of the information input terminal device 18 is depressed, and the character "close" is displayed on the display 21. Then, one of the numeric keys 22i is depressed to input the weather conditions when the shop closes, similarly to the above.

When the confirmation key 22e is depressed, the shop-closing data are transmitted to the controller 27, and the signal device is lighted in green, as shown in FIG. 14. Further, the deposit number indication sheet 33 on that day is discharged from the printer 29.

The staff suitably executes the staff-arrival process by the information input terminal device 18 of the working cabinet 10 when he arrives.

The staff arrival/leaving key 22b of the information input terminal device 18 is depressed, and the character "attendance" is displayed on the display 21. Then, when the staff ID card 25 is let pass through the card reader 23, the staff ID code is displayed on the display 21.

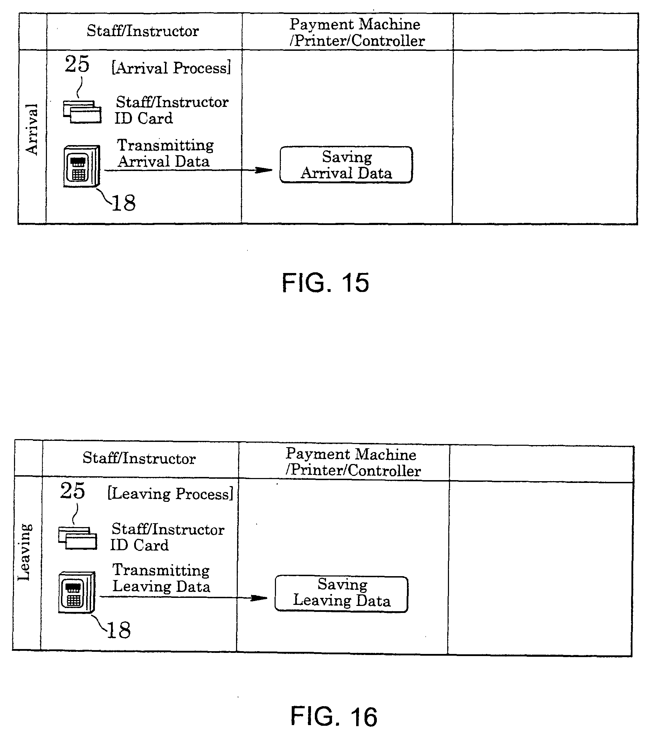

As shown in FIG. 15, the staff-arrival data are transmitted to the controller 27.

The staff suitably executes the staff-leaving process by the information input terminal device 18 of the working cabinet 10 when he leaves.

The staff arrival/leaving key 22b of the information input terminal device 18 is depressed, and the character "leave" is displayed on the display 21. Then, when the staff ID card 25 is let pass through the card reader 23, the staff ID code is displayed on the display 21.

As shown in FIG. 16, the staff-leaving data are then transmitted to the controller 27.

The staff executes the processing in charge of haircut by the information input terminal device 18 of the working cabinet 10 before executing the haircut work first.

The haircutter key 22c of the information input terminal device 18 is depressed, and the character "in charge" is displayed on the display 21. Then, when the staff ID card 25 is let pass through the card reader 23, the staff ID code is displayed on the display 21.

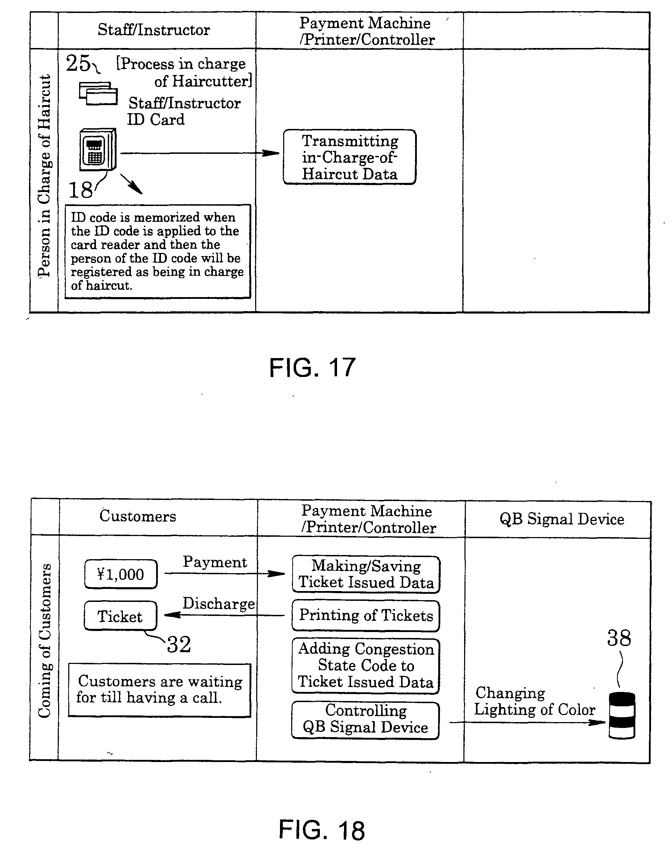

The haircut charge data are transmitted to the controller 27 as shown in FIG. 17.

The customer inserts currency of one-thousand-yen note into the currency bill inlet 30 of the payment machine 28 of the ticket vendor 26 of the reception cabinet 11 when he comes to the shop. Then, the ticket 32 as shown in FIG. 9 is printed and discharged from the ticket outlet 31 of the printer 29.

Descriptions such as the issue date, issue time, ticket number, shop number, condition for use and the like are printed on the haircut ticket 32.

Ticket issue data are prepared in the controller 27 and stored, as shown in FIG.18. A congestion state code is added to the ticket issue data, and the lighting color of the signal device 38 is changed to green, yellow and red according to the congestion state.

The staff calls waiting customers in order, receives a haircut ticket 32 from the customer, and executes the start-a-haircut process by the information input terminal device 18 before starting haircut.

The start-a-haircut key 22d of the information input terminal device 18 is depressed to assume the state capable of inputting customer information, and one of the numeric keys 22i is depressed to input the haircut ticket number, the customer sex distinction, age, and classification of visit. With respect to the sex distinction, "1" indicates male; and "2" is female, and with respect to the age, "0" indicates under 10 years of age; "1" is 10 years; "2" is 20 years; "3" is 30 years; "4" is forty years; "5" is fifty years; and "6" is above 60 years. With respect to the classification of visit, "1" indicates newcomer; and "2" is coming again.

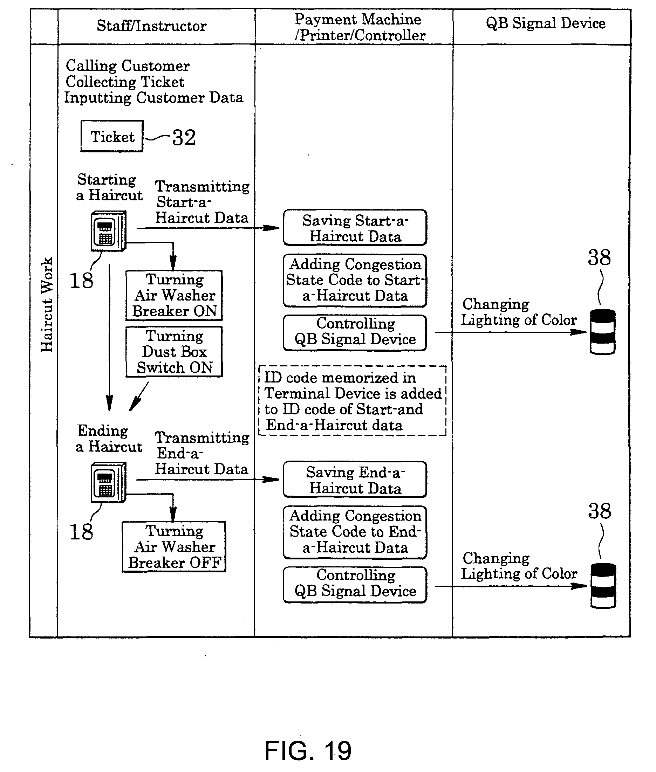

When the confirmation key 22e is depressed, the start-a-haircut data are transmitted to the controller 27, as shown in FIG. 19. The congestion state code is added to the start-a-haircut data, and the lighting state of the signal device 38 is changed to green, yellow and red according to the congestion state. Further, the breaker 20 of the air cleaning device 17 is turned ON.

The staff cuts the hair of the head of the customer, and after hair waste in the hair of the head has been absorbed by the air cleaning device 17, opens the rear plate part 13a of the dust box 13 to sweep out the hair waste, dust and the like, which are then received in the dust box 13.

When the rear plate part 13a of the dust box 13 is opened, the switch 14 is turned ON, so that the end-a-haircut data are transmitted to the controller 27 as shown in FIG. 19. The congestion state code is added to the end-a-haircut data, and the lighting state of the signal device 38 is changed to green, yellow and red according to the congestion state. And the breaker 20 of the air cleaning device 17 is turned OFF.

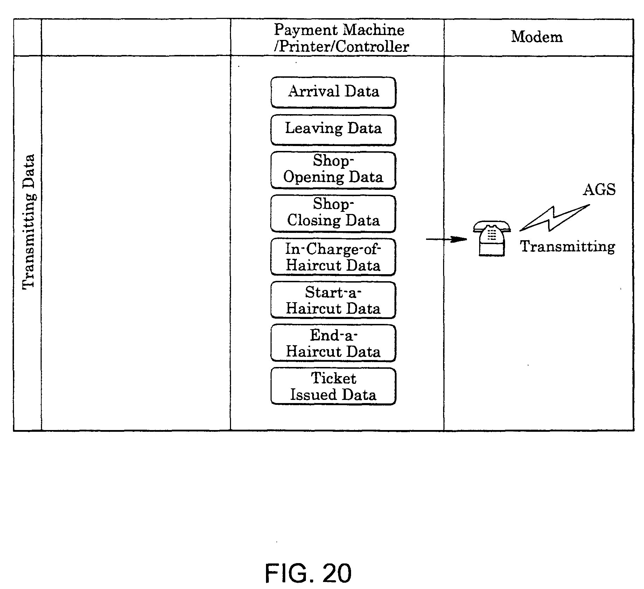

In the foregoing, the operating and processing procedure in the shops 2 has been described. Various data prepared in the respective processing are stored in the controller 27 as shown in FIG. 20, and transferred to the web server device 51 and the data base server device 52 by the data transfer command from the business consignment organ 3, as shown in FIGS. 1 and 2.

In the management system for barber and beauty shops 1 according to the present invention, the shops 2, the business consignment organ 3, the management head office 4, the financial institutions 5, the owners 6 and the staffs 7 are connected through the communication network so as to transmit or receive various information respectively. Therefore, the management head office 4 is able to collect positively and quickly the sales information, the staff information, the customer information of the shops and the like, enabling considerable reduction in labor and time for managing the shops 2.

Further, since the sales information, the staff information, the customer information of the shops and the like can be collected positively and quickly, it is possible to easily frame a plan for enhancing sales and improving services in the shops 2 by means of analyzing the information.

It is possible for the owners 6 as well to make inquiries about the sales state easily so that positive investment can be anticipated, and it is possible for the staffs 7 to make inquiries about actual result of the haircut and performance appraisal easily so that fair evaluation can be expected.

## Claims

1. A management system for barber and beauty shops **characterized in that** a plurality of barber and beauty shops, a business consignment organ, a management head office, and owners are connected through a communication network so as to make a package management of sales information, staff information, customer information and the like of the shops

2. The management system for barber and beauty shops according to claim 1 wherein said staff information includes the attendance time and the haircut time of the staff.

3. The management system for barber and beauty shops according to claim 1 or 2 wherein said customer information includes the sex distinction, age, and classification of visit of the customers.

4. The management system for barber and beauty shops according to claim 1, 2 and 3 wherein said sales information is transmitted from a payment machine of a haircut ticket vendor disposed in a reception of the each shop.

5. The management system for barber and beauty shops according to claim 1, 2, 3 and 4 wherein said staff information and said customer information are input from an information input terminal device disposed in the vicinity of a hair cutting chair of the each shop.
